# EUROPEAN PATENT APPLICATION

(11) **EP 4 759 904 A1**
(43) Date of publication of application: **17.06.2026**
(21) Application number: 24851865.6
(22) Date of filing: 06.08.2024
(51) Int. Cl.: C10K 1/04, B01D 53/22, C10L 1/02

(54) **CONDENSING DEVICE**

(30) Priority: 08.08.2023 JP 2023129542
(71) Applicant: NGK Insulators, Ltd., Nagoya-shi, Aichi 467-8530 (JP)
(72) Inventor: ANDO, Junichi, Nagoya-shi, Aichi 467-8530 (JP); SHIMIZU, Katsuya, Nagoya-shi, Aichi 467-8530 (JP); IIDA, Kazuki, Nagoya-shi, Aichi 467-8530 (JP); MAEHARA, Sota, Nagoya-shi, Aichi 467-8530 (JP); KAN, Hirofumi, Nagoya-shi, Aichi 467-8530 (JP)
(74) Representative: Müller-Boré & Partner Patentanwälte PartG mbB
(86) International application number: PCT/JP2024/028145
(87) International publication number: WO 2025/033442

(57) **Abstract**

Provided is a condensing device capable of saving energy in a step of condensing a gas, in particular, in a step of condensing a fuel gas into liquid fuel. An embodiment of the present disclosure provides a condensing device, including: a gas separator, to which a mixed gas is to be supplied, and which is configured to separate the mixed gas into a first gas and a second gas; a decompression device configured to decompress the second gas; and a cooling device configured to cool the second gas, in which the condensing device is configured so that, through the gas separator, Joule-Thomson coefficient of the second gas becomes larger than Joule-Thomson coefficient of the mixed gas.

## Description

### Technical Field

The present disclosure relates to a condensing device.

### Background Art

In recent years, in order to realize a carbon-neutral society, it has been proposed to regard carbon oxides, such as carbon monoxide and carbon dioxide, as carbon resources and convert these carbon oxides into useful liquid fuels as industrial basic raw materials. For example, in Patent Literature 1, there is disclosed a method of producing methanol involving introducing a raw material synthesis gas into a methanol synthesis reactor and converting part of the raw material synthesis gas into methanol.

The method of producing methanol described in Patent Literature 1 involves cooling a gas containing methanol to condense the methanol and separating the liquid crude methanol from an unreacted gas. However, currently, in such reaction system that synthesizes liquid fuel from carbon oxide, condensing a fuel component in a gas state into a liquid state requires a significantly large amount of energy (heat removal energy), and hence various issues to be addressed for practical use remain.

### Citation List

### Patent Literature

[PTL 1] JP 2020-63193 A

### Summary of Invention

### Technical Problem

A primary object of the present disclosure is to provide a condensing device capable of saving energy in a step of condensing a gas, in particular, in a step of condensing a fuel gas into liquid fuel.

### Solution to Problem

[1] A condensing device according to an embodiment of the present disclosure includes a gas separator, a decompression device, and a cooling device. A mixed gas containing a fuel gas is supplied to the gas separator. The gas separator is configured to separate the mixed gas into a first gas and a second gas containing the fuel gas. The decompression device is configured to decompress the second gas. The cooling device is configured to cool the second gas. The condensing device is configured so that, through the gas separator, Joule-Thomson coefficient of the second gas becomes larger than Joule-Thomson coefficient of the mixed gas.
[2] The condensing device according to the above-mentioned item [1] may further include at least one reactor. The at least one reactor is arranged on an upstream side of the gas separator in a supply direction of the mixed gas with respect to the gas separator. A raw material gas containing carbon oxide and hydrogen is to be supplied to the reactor. The reactor is configured to discharge a mixed gas containing a fuel gas serving as a reaction product of carbon oxide and hydrogen and the raw material gas that remains unreacted.
[3] In the condensing device according to the above-mentioned item [2], the gas separator may be configured to separate the mixed gas supplied from the reactor into a first gas containing hydrogen as a main component and a second gas containing the fuel gas.
[4] The condensing device according to the above-mentioned item [2] or [3] may further include a return line. The return line may be configured to return a gas component of the second gas, which remains in a gas state even after decompression and cooling, to the reactor.
[5] The condensing device according to the above-mentioned item [3] may further include a gas-liquid separator. The gas-liquid separator is arranged on a downstream side of the gas separator in a discharge direction of the second gas from the gas separator. The gas-liquid separator is configured to separate liquid fuel condensed from the second gas by decompression and cooling from a gas component of the second gas, which remains in a gas state even after decompression and cooling.
[6] In the condensing device according to any one of the above-mentioned items [2] to [5], the reactor may be a membrane reactor.
[7] In the condensing device according to any one of the above-mentioned items [1] to [6], the Joule-Thomson coefficient of the second gas may be 15.9 K/MPa or less.
[8] In the condensing device according to any one of the above-mentioned items [1] to [7], the liquid fuel may contain alcohols as a main component.
[9] The condensing device according to any one of the above-mentioned items [1] to [8] may be a fuel gas condensing device.

### Advantageous Effects of Invention

According to the embodiment of the present disclosure, it is possible to save energy in the step of condensing a gas, in particular, in the step of condensing a fuel gas into liquid fuel.

### Brief Description of Drawings

FIG. 1 is a schematic configuration view of a fuel gas condensing device according to one embodiment of the present disclosure.
FIG. 2 is a schematic configuration view of a fuel gas condensing device according to another embodiment of the present disclosure.
FIG. **3** is a schematic sectional view of a reactor included in the fuel gas condensing device of FIG. **1****.**
FIG. **4** is a schematic sectional view of a reactor according to another embodiment included in the fuel gas condensing device of FIG. **1****.**
FIG. **5** is a schematic sectional view of a reactor according to still another embodiment included in the fuel gas condensing device of FIG. **1****.**
FIG. **6** is a schematic perspective view of a separation membrane complex included in the reactor of FIG. **5****.**

### Description of Embodiments

Embodiments of the present disclosure are described below with reference to the drawings. However, the present disclosure is not limited to these embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present disclosure.

### A. Outline of Fuel Gas Condensing Device

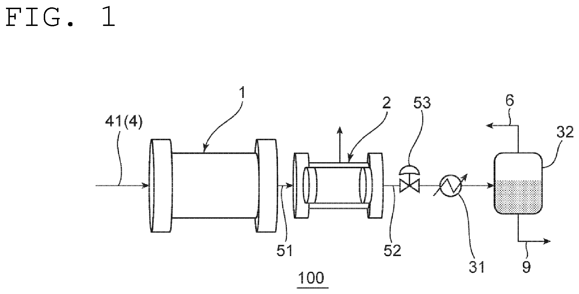

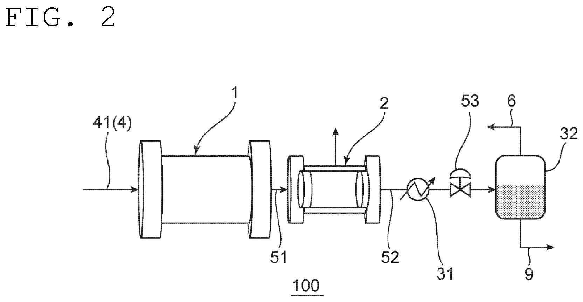

FIG. **1** is a schematic configuration view of a fuel gas condensing device according to one embodiment of the present disclosure. FIG. **2** is a schematic configuration view of a fuel gas condensing device according to another embodiment of the present disclosure.

In one embodiment, the condensing device is a fuel gas condensing device **100.** The fuel gas condensing device **100** of an illustrated example can typically produce liquid fuel by condensing a fuel gas. That is, the fuel gas condensing device **100** can implement a method of producing liquid fuel.

As illustrated in FIG. **1****,** the fuel gas condensing device **100** includes a gas separator **2,** a decompression device **53,** and a cooling device **31.** A mixed gas containing a fuel gas is supplied to the gas separator **2.** The gas separator **2** is capable of separating the mixed gas into a first gas and a second gas containing the fuel gas. The second gas is typically discharged from the gas separator **2** after separation in the gas separator **2.** In the illustrated example, the decompression device **53** and the cooling device **31** are each arranged on a downstream side of the gas separator **2** in a discharge direction of the second gas from the gas separator **2.** The decompression device **53** is capable of decompressing the second gas. The cooling device **31** is capable of cooling the second gas. The fuel gas condensing device **100** is configured so that, through the gas separator **2,** Joule-Thomson coefficient of the second gas becomes larger than Joule-Thomson coefficient of the mixed gas.

The inventors of the present disclosure have found that, when a fuel gas or the like is condensed by cooling, a gas component (in particular, hydrogen) present in a mixed gas, which is different from the fuel gas, causes significant energy consumption. In view of the foregoing, the inventors of the present disclosure have made extensive investigations on separation and recovery means of liquid fuel, and as a result, have found that by separating a mixed gas containing a fuel gas into a first gas and a second gas containing the fuel gas, then increasing the Joule-Thomson coefficient of the second gas to be larger than the Joule-Thomson coefficient of the mixed gas, and subsequently decompressing and cooling the second gas, a gas component contained in the second gas, in particular, the fuel gas can be condensed in an energy-saving manner.

Specifically, the gas separator **2** is capable of separating the mixed gas into a first gas and a second gas containing the fuel gas. The Joule-Thomson coefficient (hereinafter referred to as "JT coefficient") of the second gas after separation is larger than the JT coefficient of the mixed gas before separation. This means that a decrease in temperature at the time of decompression of the second gas is larger as compared to the mixed gas. In other words, the gas separator **2** can perform a gas separation step of separating the mixed gas into the first gas and the second gas so that the JT coefficients satisfy the above-mentioned relationship.

Thus, when the second gas having the JT coefficient adjusted in this manner is decompressed by the decompression device **53** (decompression step) and cooled by the cooling device **31** (cooling step), even for a gas with the same heat capacity, the second gas can be efficiently decreased in temperature, and the heat removal energy required for condensing the gas component contained in the second gas, in particular, the fuel gas can be reduced. As a result, the fuel gas can be condensed into liquid fuel in an energy-saving manner.

As used herein, "liquid fuel" means fuel that is in a liquid state at room temperature and normal pressure or fuel that can be liquefied under a pressurized state at room temperature.

Examples of the fuel that is in a liquid state at room temperature and normal pressure include alcohols such as methanol and ethanol; hydrocarbons represented by CₙH₂₍ₘ₋₂ₙ₎ (where "m" is an integer of less than 90 and "n" is an integer of less than 30); and mixtures thereof.

Examples of the fuel that can be liquefied under a pressurized state at room temperature include propane, butane, and mixtures thereof.

In one embodiment, the liquid fuel contains alcohols as a main component. When the main component of the liquid fuel is hydrocarbons, there is a risk in that a member included in the gas separator (typically, a hydrogen separation membrane) may be clogged, resulting in a decrease in function of the gas separator. Meanwhile, when the main component of the liquid fuel is alcohols, the function of the gas separator can be sufficiently maintained. The main component means a component present in the largest amount in terms of a composition ratio.

In the above-mentioned embodiment, the condensing device condenses the fuel gas, but the present disclosure is not limited thereto. For example, the condensing device may condense gas components contained in the second gas other than the fuel gas (hereinafter referred to as "other gas components"). Examples of the other gas components include impurity gases, such as a by-product gas, produced as a by-product in the reactor described later. When the condensing device condenses the impurity gases, impurities can be removed from the fuel gas in an energy-saving manner.

In one embodiment, the fuel gas condensing device **100** further includes at least one reactor **1.** The at least one reactor **1** is arranged on an upstream side of the gas separator **2** in a supply direction of the mixed gas with respect to the gas separator **2.** A raw material gas containing carbon oxide and hydrogen is supplied to the reactor **1.** The reactor **1** is capable of discharging the mixed gas. The mixed gas contains a fuel gas serving as a reaction product of carbon oxide and hydrogen and a raw material gas that remains unreacted. The reactor **1** is positioned on the side opposite to the decompression device **53** with respect to the gas separator **2.** The liquid fuel condensing device **100** may further include a supply unit **4** that supplies the raw material gas to the reactor **1.** The supply unit **4** typically includes a supply line **41** through which the raw material gas passes.

As described above, the raw material gas contains carbon oxide and hydrogen.

Examples of carbon oxide include carbon dioxide (CO₂) and carbon monoxide (CO). The raw material gas may contain only one kind of carbon oxide or may contain two or more kinds thereof. Of the carbon oxides, there is given preferably carbon dioxide (CO₂), more preferably carbon dioxide (CO₂) recovered from the atmosphere by Direct Air Capture (DAC).

The content ratios of carbon oxide and hydrogen in the raw material gas may be appropriately adjusted in accordance with a conversion reaction performed in the reactor **1.**

In the reactor **1,** a conversion reaction (reaction step) between carbon oxide and hydrogen can be performed. Examples of the conversion reaction between carbon oxide and hydrogen include a methanol synthesis reaction and an ethanol synthesis reaction, preferably a methanol synthesis reaction.

The methanol synthesis reaction may include reactions represented by the following formulae.

CO+2H₂⇔CH₃OH (1)

CO₂+3H₂⇔CH₃OH+H₂O (2)

CO₂+H₂⇔CO+H₂O (3)

The reactions of the formulae (1) to (3) described above are all equilibrium reactions. Thus, carbon oxide and hydrogen are preferably reacted under high temperature and high pressure. As a result, the conversion rate and reaction speed can be improved.

The synthesis of methanol is described below as an example.

The pressure in the reactor **1** is, for example, 1.2 MPa (absolute pressure) or more, preferably 3.0 MPa (absolute pressure) or more, more preferably 3.5 MPa (absolute pressure) or more, still more preferably 4.0 MPa (absolute pressure) or more. Meanwhile, the pressure in the reactor **1** is, for example, 7.0 MPa (absolute pressure) or less, preferably 5.5 MPa (absolute pressure) or less. When the pressure in the reactor **1** falls within the above-mentioned ranges, the pressure of the mixed gas discharged from the reactor can also be adjusted within the above-mentioned ranges. When the pressure of the mixed gas falls within the above-mentioned ranges, a first gas containing hydrogen as a main component and a second gas containing a fuel gas can be efficiently separated from each other through use of the pressure of the mixed gas in the gas separator.

The temperature in the reactor **1** is, for example, 200°C or more, preferably 210°C or more, more preferably 220°C or more. Meanwhile, the temperature in the reactor **1** is, for example, 320°C or less, preferably 300°C or less, more preferably 290°C or less. When the temperature in the reactor 1 falls within the above-mentioned ranges, the temperature of the mixed gas discharged from the reactor can also be adjusted within the above-mentioned ranges. When the temperature of the mixed gas falls within the above-mentioned ranges, the liquefaction of the fuel gas in the gas separator can be suppressed.

As described above, the mixed gas discharged from the reactor **1** contains a fuel gas (typically gaseous methanol) serving as a reaction product and a raw material gas (typically hydrogen, or hydrogen and carbon oxide) that remains unreacted. The mixed gas may further contain a by-product gas produced as a by-product in the above-mentioned conversion reaction.

The content ratio of the fuel gas in the mixed gas is, for example, 1.0 mol% or more, preferably 3.0 mol% or more. Meanwhile, the content ratio of the fuel gas in the mixed gas is, for example, 60.0 mol% or less, and also, for example, 55.0 mol% or less. The content ratios of various gases may be measured by gas chromatography or the like.

The content ratio of the raw material gas in the mixed gas is, for example, 2.0 mol% or more, preferably 3.0 mol% or more. Meanwhile, the upper limit of the content ratio of the raw material gas in the mixed gas is typically 90 mol%.

The reactor **1** and the gas separator **2** may be directly connected to each other, or a pressure boosting device and/or a decompression device may be provided between the reactor **1** and the gas separator **2.** The pressure boosting device can increase the pressure of the mixed gas sent from the reactor **1** to the gas separator **2.** Specific examples of the pressure boosting device include a compressor and a blower. The decompression device can reduce the pressure of the mixed gas sent from the reactor **1** to the gas separator **2.** A specific example of the decompression device is a decompression valve.

In addition, a removal device capable of removing part of gas components contained in the mixed gas may be provided between the reactor **1** and the gas separator **2.** With this configuration, even when the mixed gas discharged from the reactor contains a gas component that decreases the performance of the gas separator, the gas component can be removed by the removal device. As a result, a decrease in performance of the gas separator can be suppressed, and the performance of the gas separator can be ensured for a long period of time.

In one embodiment, the gas separator **2** is installed directly below the reactor **1,** and the reactor **1** and the gas separator **2** are directly connected to each other. With this configuration, the loss of pressure energy in the mixed gas can be reduced as compared to the case in which the decompression device and/or the removal device is provided between the reactor and the gas separator. In addition, the mixed gas having a sufficient pressure can be supplied to the gas separator without the pressure boosting device, and hence the power required for driving the pressure boosting device can be reduced.

In the illustrated example, the fuel gas condensing device **100** further includes a first connection line **51** capable of supplying the mixed gas discharged from the reactor **1** to the gas separator **2.** The first connection line **51** directly connects the reactor **1** and the gas separator **2.**

After being supplied to the gas separator **2,** the mixed gas is separated into the first gas containing hydrogen as a main component and the second gas containing a fuel gas in the gas separator **2.** In other words, the gas separator **2** separates the mixed gas supplied from the reactor **1** into the first gas containing hydrogen as a main component and the second gas containing a fuel gas (gas separation step). As a result, hydrogen contained in the second gas can be reduced, and hence the JT coefficient of the second gas after separation can be sufficiently increased. This means that a decrease in temperature at the time of decompression of the second gas is increased, and even for a gas with the same heat capacity, the fuel gas contained in the second gas can be condensed in a more energy-saving manner.

In the illustrated example, the condensing device **100** includes one gas separator, but the number of gas separators is not limited thereto. The condensing device **100** may include a plurality of gas separators. By appropriately changing the number of gas separators, the compositions of the first gas and the second gas can be controlled.

The pressure of the mixed gas immediately before being supplied to the gas separator **2** is, for example, from 1.2 MPa (absolute pressure) to 7.0 MPa (absolute pressure), preferably from 3.0 MPa (absolute pressure) to 5.5 MPa (absolute pressure).

The temperature of the mixed gas immediately before being supplied to the gas separator **2** is, for example, from 200°C to 320°C, preferably from 210°C to 300°C.

The JT coefficient of the mixed gas immediately before being supplied to the gas separator **2** is, for example, from 0.7 K/MPa to 10.4 K/MPa.

The JT coefficient of the mixed gas may be calculated as the sum of (JT coefficient at a partial pressure of each gas component contained in the raw material gas)×(composition ratio of the corresponding gas component).

The first gas separated in the gas separator **2** may be utilized for any appropriate application. The first gas may also be used as fuel for peripheral facilities or may also be used as a raw material for another conversion reaction. The second gas separated in the gas separator **2** is sent from the gas separator **2** to the decompression device **53** or the cooling device **31** as described in detail later.

The gas separator **2** may adopt any appropriate configuration. In one embodiment, the gas separator **2** includes a hydrogen separation membrane through which hydrogen is allowed to permeate. With this configuration, the mixed gas can be smoothly separated into the first gas and the second gas by suitably utilizing the pressure of the mixed gas. An example of such gas separator **2** is a DDR zeolite membrane described in JP 2004-105942 A. The entire description of this publication is incorporated herein by reference.

The content ratio of hydrogen in the first gas is, for example, 50 mol% or more, preferably 70 mol% or more. Meanwhile, the content ratio of hydrogen in the first gas is, for example, 100 mol% or less, and also, for example, 90 mol% or less.

The amount of hydrogen contained in the first gas is, for example, 0.80 or more, preferably 0.90 or more, when the amount of hydrogen contained in the mixed gas discharged from reactor **1** is set to 1 on a molar basis. When the first gas contains such amount of hydrogen, the amount of hydrogen remaining in the second gas can be sufficiently reduced, and the energy required for cooling the second gas at the time of condensation of the fuel gas (heat removal energy) can be sufficiently reduced. Meanwhile, the amount of hydrogen contained in the first gas is, for example, 1.0 or less, when the amount of hydrogen contained in the mixed gas discharged from the reactor **1** is set to 1 on a molar basis. When the first gas contains such amount of hydrogen, the liquefaction of the fuel gas in the gas separator can be stably suppressed, and as a result, the production efficiency of liquid fuel can be improved.

The first gas may contain carbon oxide in addition to hydrogen.

The content ratio of carbon oxide in the first gas is, for example, 0 mol% or more, preferably 10 mol% or more. Meanwhile, the content ratio of carbon oxide in the first gas is, for example, less than 50 mol%, and also, for example, 30 mol% or less.

The amount of carbon oxide contained in the first gas is, for example, 0.60 or more, preferably 0.70 or more, when the amount of carbon oxide contained in the mixed gas is set to 1 on a molar basis. Meanwhile, the amount of carbon oxide contained in the first gas is, for example, 0.80 or less, when the amount of carbon oxide contained in the mixed gas is set to 1 on a molar basis.

In addition, the first gas does not substantially contain a fuel gas. The content ratio of the fuel gas in the first gas is, for example, 1.0 mol% or less, preferably 0.5 mol% or less, more preferably 0.1 mol% or less, still more preferably 0 mol%.

The second gas separated in the gas separator **2** contains at least a fuel gas (typically, gaseous methanol).

The content ratio of the fuel gas in the second gas is, for example, 9.0 mol% or more, preferably 15.0 mol% or more. Meanwhile, the content ratio of the fuel gas in the second gas is, for example, 95.0 mol% or less, and also, for example, 85.0 mol% or less. When the content ratio of the fuel gas in the second gas is equal to or more than the above-mentioned lower limit, liquid fuel can be efficiently recovered in a gas-liquid separator.

The second gas may contain a raw material gas (typically carbon oxide, or hydrogen and carbon oxide) and/or impurity gases, such as a by-product gas, in addition to the fuel gas.

The pressure of the second gas is typically lower than the pressure of the mixed gas discharged from the reactor **1.**

The gas separator **2** may separate the second gas in a normal pressure state (0.1 MPa) or in a pressurized state (more than 0.1 MPa). When the gas separator **2** includes a hydrogen separation membrane, the gas separator **2** can stably separate the second gas in a pressurized state. In this case, the second gas in a pressurized state is discharged from the gas separator **2.**

The pressure of the second gas in a pressurized state is preferably 3.0 MPa (absolute pressure) or more, more preferably 3.3 MPa (absolute pressure) or more. Meanwhile, the pressure of the second gas in a pressurized state is, for example, 6.8 MPa (absolute pressure) or less, preferably 5.3 MPa (absolute pressure) or less, more preferably 5.0 MPa (absolute pressure) or less.

The temperature of the second gas is, for example, 200°C or more, preferably 210°C or more, more preferably 220°C or more. Meanwhile, the upper limit of the temperature of the second gas is typically 300°C.

The JT coefficient of the second gas is, for example, more than 0.7 K/MPa. Meanwhile, the upper limit of the JT coefficient of the second gas is typically 15.9 K/MPa. In other words, the gas separator can separate hydrogen from the mixed gas so that the JT coefficient of the second gas falls within such range. When the JT coefficient of the second gas immediately after separation falls within such range, the second gas can be efficiently decreased in temperature by decompressing the second gas. As a result, the heat removal energy required at the time of condensation of the fuel gas can be reduced. In addition, when the JT coefficient of the second gas falls within such range, the cost of the membrane and the loss amount of the raw material can be suppressed.

The JT coefficient of the second gas may be calculated as the sum of (JT coefficient at a partial pressure of each gas component contained in the second gas) × (composition ratio of the corresponding gas component).

The difference between the JT coefficient of the second gas and the JT coefficient of the mixed gas (JT coefficient of the second gas-JT coefficient of the mixed gas) is, for example, more than 0 K/MPa and 13.1 K/MPa or less. In other words, the gas separator can separate hydrogen from the mixed gas so that the difference between the JT coefficient of the second gas immediately after separation and the JT coefficient of the mixed gas immediately before separation falls within such range. When the JT coefficient difference between the second gas and the mixed gas is adjusted in this manner, the second gas can be more efficiently decreased in temperature by decompressing the second gas. In addition, when the JT coefficient difference between the second gas and the mixed gas falls within such range, the cost of the membrane and the loss amount of the raw material can be suppressed.

Although not shown, the fuel gas condensing device **100** may include a plurality of reactors **1** and a plurality of gas separators **2.** In this embodiment, the reactors **1** and the gas separators **2** are alternately arranged in a gas passage direction. The mixed gas discharged from the reactor **1** is supplied to the gas separator **2** positioned on a downstream side of the corresponding reactor **1,** and is separated into a first gas and a second gas in the gas separator **2.** After that, the second gas separated in the gas separator **2** is supplied to the next reactor **1.** When a raw material gas remains in the second gas, the raw material gas is utilized in the above-mentioned conversion reaction in the reactor **1.**

In one embodiment, the difference between the JT coefficient of the second gas separated in the gas separator **2** positioned on the most downstream side in the gas passage direction, of the plurality of gas separators **2,** and the JT coefficient of the mixed gas supplied to the corresponding gas separator **2** is adjusted within the above-mentioned range of the JT coefficient difference.

The decompression device **53** is typically arranged on the side opposite to the reactor **1** with respect to the gas separator **2.** In one embodiment, the decompression device **53** can decompress the second gas between the gas separator **2** and the cooling device **31.** That is, the decompression device **53** can perform a decompression step of decompressing the second gas.

In the illustrated example, the fuel gas condensing device **100** further includes a second connection line **52** capable of supplying the second gas separated in the gas separator **2** to a gas-liquid separator **32,** and the decompression device **53** is provided on the second connection line **52.** The decompression device **53** is typically a decompression valve.

More specifically, the decompression device (decompression valve **53)** can decompress the second gas to, for example, 5.0 MPa (absolute pressure) or less, and also to, for example, normal pressure (0.1 MPa). As a result, the second gas can be sufficiently decreased in temperature, and the heat removal energy for the second gas can be further reduced.

The second gas is cooled by the cooling device **31** (cooling step). In one embodiment, the cooling device **31** is arranged on the side opposite to the gas separator **2** with respect to the decompression device **53,** and cools the second gas after decompression to a cooling temperature described later. In the illustrated example, the cooling device **31** is positioned on a downstream side of the decompression device **53** in a discharge direction of the second gas from the gas separator **2** and is provided on the second connection line **52.** The cooling device **31** may have any appropriate configuration.

The cooling temperature in the cooling device **31** is typically equal to or less than the condensation point (boiling point) of the reaction product (fuel gas). The cooling temperature is, for example, 50°C or less, preferably 40°C or less. Meanwhile, the cooling temperature is, for example, 0°C or more, preferably 10°C or more.

When the second gas is decompressed and cooled, of the respective components contained in the second gas, components each having a boiling point (condensation point) equal to or more than the above-mentioned cooling temperature (typically, the fuel gas and part of the by-product gas) can be stably liquefied to provide liquid fuel. In addition, when the cooling temperature falls within the above-mentioned range, the fuel gas can be liquefied more stably.

In addition, as illustrated in FIG. **2****,** the cooling device **31** may be provided between the gas separator **2** and the decompression device **53.** That is, the cooling device **31** may be positioned on an upstream side of the decompression device **53** in the discharge direction of the second gas from the gas separator **2.** In this case, the second gas separated in the gas separator **2** is first cooled to the above-mentioned cooling temperature by the cooling device **31,** and then decompressed by the decompression device **53.** Also as a result of the foregoing, of the respective components contained in the second gas, the components each having a boiling point (condensation point) equal to or more than the above-mentioned cooling temperature can be sufficiently liquefied to provide liquid fuel.

That is, the cooling step may be performed after the decompression step or before the decompression step.

In one embodiment, the liquid fuel condensing device **100** further includes the gas-liquid separator **32.** The gas-liquid separator **32** is arranged on a downstream side of the gas separator **2** in the discharge direction of the second gas from the gas separator **2.** In the illustrated example, the gas-liquid separator **32** is positioned on a downstream side of the decompression device **53** and the cooling device **31.** The gas-liquid separator **32** can separate the liquid fuel condensed from the second gas by decompression and cooling from the gas components of the second gas that remain in a gas state even after decompression and cooling. In other words, the gas-liquid separator **32** can perform a gas-liquid separation step of separating the liquid fuel from the gas components.

The gas-liquid separator **32** is typically a separation tank. The liquid fuel and the gas components (typically the raw material gas and part of the by-product) each having a boiling point (condensation point) less than the above-mentioned cooling temperature are supplied to the separation tank in a mixed state, and by storing this mixture, the liquid fuel and the gas components undergo gas-liquid separation.

The liquid fuel contains at least a reaction product in a liquid state. The content ratio of the reaction product in the liquid fuel is, for example, 15.0 mol% or more, preferably 20.0 mol% or more, more preferably 50.0 mol% or more. Meanwhile, the upper limit of the content ratio of the reaction product in the liquid fuel is typically 100 mol%.

The liquid fuel may contain a by-product in a liquid state in addition to the reaction product. The content ratio of the by-product in the liquid fuel is, for example, 85.0 mol% or less, preferably 80 mol% or less, more preferably 50.0 mol% or less. Meanwhile, the lower limit of the content ratio of the by-product in the liquid fuel is typically 0 mol%.

The liquid fuel is subjected to a removal step of removing a by-product, as required. As a result, the content ratio of the reaction product in the liquid fuel can be improved.

In one embodiment, the fuel gas condensing device **100** further includes a recovery line **9** capable of recovering the liquid fuel separated in the gas-liquid separator **32.** In the illustrated example, an upstream end portion of the recovery line **9** is connected to a bottom of the separation tank **32.** A downstream end portion of the recovery line **9** is connected to a fuel tank capable of storing the liquid fuel although not shown.

In one embodiment, the fuel gas condensing device **100** further includes a return line **6.** The return line **6** can return the gas components of the second gas discharged from the gas separator **2** that remain in a gas state even after decompression and cooling. In other words, the fuel gas condensing device **100** may be capable of performing a return step of returning the gas components to the reactor **1.**

In the illustrated example, the return line **6** can return the gas components separated in the gas-liquid separator **32** to the reactor **1.** An upstream end portion of the return line **6** is connected to an upper portion of the separation tank **32.** A downstream end portion of the return line **6** is connected to the supply unit **4** although not shown. As a result, the gas components can be resupplied to the reactor and recycled as a raw material gas.

In the above-mentioned embodiment, the raw material gas containing hydrogen is supplied to the reactor **1,** and the mixed gas discharged from the reactor **1** contains hydrogen that remains unreacted. However, the present disclosure is not limited thereto.

The mixed gas discharged from the reactor **1** may contain hydrogen generated in the reactor **1.** In this case, the first gas separated in the gas separator **2** contains hydrogen generated in the reactor **1.** In one embodiment, the reactor can perform a water gas shift reaction, and the mixed gas generated by the water gas shift reaction is supplied from the reactor to the gas separator to be separated into the first gas and the second gas.

As described above, the fuel gas condensing device **100** can perform a method of producing liquid fuel. The method of producing liquid fuel includes the above-mentioned gas separation step, the above-mentioned decompression step, and the above-mentioned cooling step. In one embodiment, the method of producing liquid fuel further includes the above-mentioned reaction step. In addition, the method of producing liquid fuel may further include the above-mentioned gas-liquid separation step and/or the above-mentioned return step.

The specific configuration of the reactor is described below.

### B. Reactor

The reactor **1** may adopt any appropriate configuration. The shape of the reactor **1** is not particularly limited and may be, for example, a monolithic shape, a flat plate shape, a tubular shape, a cylindrical shape, a columnar shape, a polygonal prism shape, or the like. The monolithic shape means a shape having a plurality of cells penetrating therethrough in a longitudinal direction and is the concept including a honeycomb shape.

Examples of the configuration of the reactor **1** include a membrane reactor, a fixed bed reactor, a moving bed reactor, a fluidized bed reactor, a stirred tank reactor, a tower reactor, and a tubular reactor.

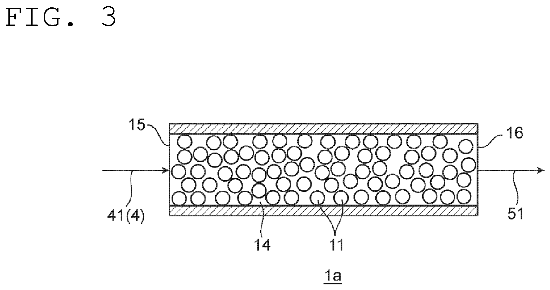

As illustrated in FIG. **3****,** in one embodiment, the reactor 1 is a tubular reactor **1a**.

The tubular reactor **1a** typically includes a gas inflow port **15** for allowing the above-mentioned raw material gas to flow therein, a gas outflow port **16** for allowing the mixed gas to flow out, and a space **14** that allows the gas inflow port **15** and the gas outflow port **16** to communicate to each other, and a catalyst **11** is accommodated in the space **14.** The space **14** functions as a gas flow path. A downstream end portion of the supply line **41** is typically connected to the gas inflow port **15.** An upstream end portion of the first connection line **51** is typically connected to the gas outflow port **16.**

The catalyst **11** can accelerate the conversion reaction of the raw material gas. The catalyst **11** is preferably filled into the flow path **14.** When the catalyst has a particle shape as in the illustrated example, the particle diameter (diameter) of each of the catalyst particles is, for example, 0.5 mm or more and 10 mm or less. The catalyst particles may be formed of only the catalyst, or the catalyst **11** may be carried on carrier particles. The carrier particles are preferably porous particles.

Any appropriate catalyst in accordance with the desired conversion reaction may be adopted as the catalyst **11.** Specific examples thereof that may be used include: metal catalysts, such as copper, palladium, nickel, ruthenium, rhodium, and platinum; oxide catalysts, such as zinc oxide, zirconia, gallium oxide, and ceria; and composite catalysts thereof, such as copper-zinc oxide, copper-zinc oxide-alumina, copper-zinc oxide-chromium oxide-alumina, copper-cobalt-titania, nickel-ceria, nickel-alumina, ruthenium-ceria, and palladium-modified catalysts thereof.

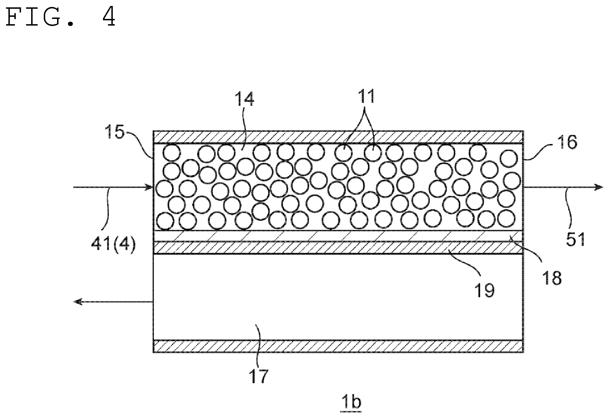

As illustrated in FIG. **4****,** in another embodiment, the reactor **1** is a membrane reactor **1b.** The membrane reactor **1b** typically includes a water vapor separation membrane **18.** In the membrane reactor, while the reaction between carbon oxide and hydrogen is allowed to proceed, water vapor generated as a by-product is separated from the mixed gas containing a fuel gas and a raw material gas by the water vapor separation membrane. As a result, the reaction between carbon oxide and hydrogen can be accelerated.

The water vapor separation membrane **18** allows water vapor to permeate therethrough, and components other than water vapor (hydrogen, carbon oxide, a fuel gas, etc.) do not easily permeate through the water vapor separation membrane **18** as compared to water vapor. Examples of the water vapor separation membrane include an inorganic membrane and an organic membrane.

Examples of the inorganic membrane include a zeolite membrane, a silica membrane, an alumina membrane, and a composite membrane thereof. Of the inorganic membranes, a zeolite membrane is preferred, and an LTA zeolite membrane having a molar ratio (Si/Al) of a silicon element (Si) to an aluminum element (Al) of 1.0 or more and 3.0 or less is more preferred.

Examples of the organic membrane include polyethylene (PE), polyvinylidene fluoride (PVDF), tetrafluoroethylene (PTFE), polypropylene (PP), cellulose acetate (CA), polyacrylonitrile (PAN), polyimide (PI), polysulfone (PS), and polyethersulfone (PES) .

The membrane reactor **1b** further includes a porous support **19.** The porous support **19** supports the water vapor separation membrane **18.** The porous support **19** is formed of a porous material. Examples of the porous material include a ceramic material, a metal material, and a resin material, and a ceramic material is preferred.

The membrane reactor **1b** includes a first gas flow path **14** and a second gas flow path **17.** The first gas flow path **14** is described in the same manner as in the space **14** of the tubular reactor **1a** described above. The first gas flow path **14** allows the gas inflow port **15** and the gas outflow port **16** described above to communicate to each other, and the catalyst **11** described above is accommodated in the first gas flow path **14.** In the illustrated example, the water vapor separation membrane **18** faces the first gas flow path **14.**

The second gas flow path **17** is positioned on the side opposite to the first gas flow path **14** with respect to the water vapor separation membrane **18.** Water vapor having passed through the water vapor separation membrane **18** may flow into the second gas flow path **17.** In addition, a sweep gas for purging water vapor may be supplied to the second gas flow path **17.**

The membrane reactor **1b** may adopt any appropriate configuration. The shape of the membrane reactor **1b** is not particularly limited. Examples of the shape of the membrane reactor **1b** include a monolithic shape, a flat plate shape, a tubular shape, a cylindrical shape, a columnar shape, and a polygonal prism shape. The monolithic shape means a shape having a plurality of cells penetrating therethrough in a longitudinal direction and is the concept including a honeycomb shape.

Examples of the configuration of the membrane reactor **1b** include a fixed bed reactor, a moving bed reactor, a fluidized bed reactor, a stirred tank reactor, a tower reactor, a tubular reactor, and a membrane reactor.

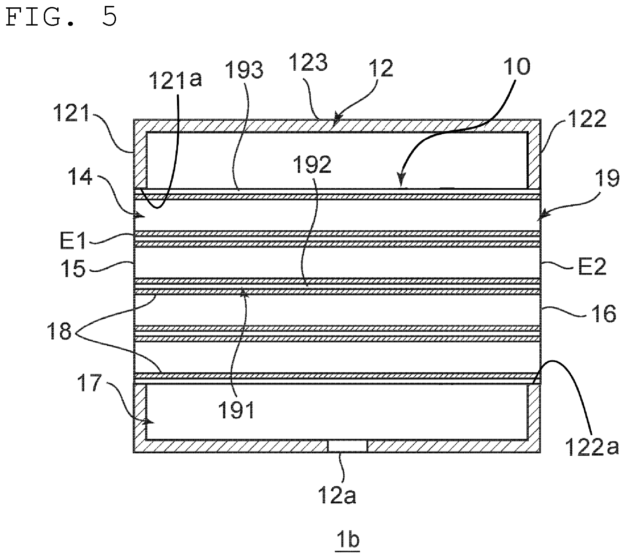

As illustrated in FIG. **5****,** in one embodiment, the membrane reactor **1b** includes a separation membrane complex **10** and a housing **12.**

The separation membrane complex **10** includes the porous support **19** having a monolithic (honeycomb) shape and the water vapor separation membranes **18.**

The porous support **19** having a monolithic shape has any appropriate shape (overall shape). The porous support **19** typically has a column shape extending in a predetermined direction. Examples of the shape of the porous support **19** include a columnar shape having a circular bottom surface, an elliptical column shape having an elliptical bottom surface, a prismatic shape having a polygonal bottom surface, and a column shape having an irregular bottom surface. The outer diameter and length of the porous support **19** may be appropriately set in accordance with purposes.

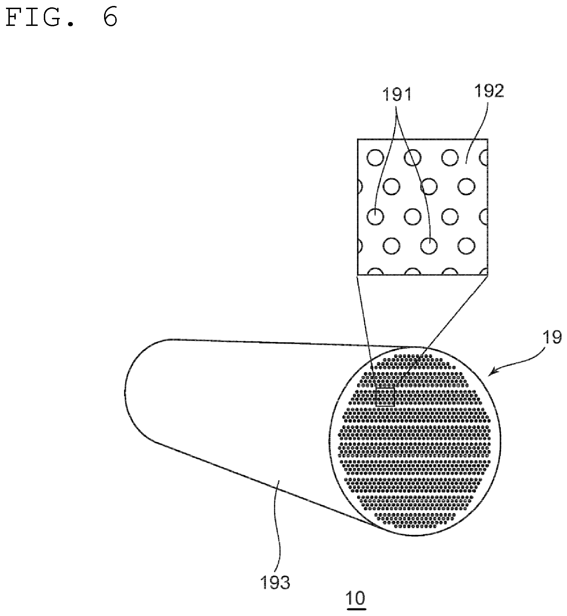

As illustrated in FIG. **6****,** in one embodiment, the porous support **19** has a columnar shape. In the illustrated example, the porous support **19** includes an outer wall **193** and partition walls **192.** The outer wall **193** and the partition walls **192** may be integrally formed or may be separate. In the illustrated example, the outer wall **193** and the partition walls **192** are integrally formed.

The outer wall **193** forms an outer peripheral portion of the porous support **19** having a column shape and has any appropriate tubular shape.

The partition walls **192** are positioned on an inner side of the outer wall **193** and define a plurality of cells **191.**

As illustrated in FIG. **5****,** each of the plurality of cells **191** typically extends in a length direction (axial direction) of the separation membrane complex **10** from a first end face **E1** (upstream end face) to a second end face **E2** (downstream end face) of the separation membrane complex **10**.

Each of the plurality of cells **191** has any appropriate shape in a cross-section in a direction perpendicular to the length direction. Examples of the sectional shape of the cell **191** include a triangle, a quadrilateral, a pentagon, a hexagon or polygons having more sides, a circle, and an ellipse. A circle is preferred.

The distance between the center axes of the plurality of cells **191** is, for example, from 0.3 mm to 20 mm. A cell density in a cross-section in the direction perpendicular to the length direction of the separation membrane complex **10** (that is, the number of cells **191** per unit area) may be appropriately set in accordance with purposes. The cell density may be, for example, from 0.5 cells/cm² to 320 cells/cm². When the cell density falls within such range, the strength and effective geometric surface area (GSA) of the porous support can be sufficiently ensured.

In the illustrated example, the water vapor separation membrane **18** is formed on the inner surface of each of the plurality of cells **191.** The water vapor separation membrane **18** may be formed entirely on the inner surface of the cell **191** or may be formed partially on the inner surface of the cell **191.**

In one embodiment, the first gas flow path **14** described above is formed in a portion of the cross-section of the cell **191** in which the water vapor separation membrane **18** is not formed (typically in a central portion). The first gas flow path **14** extends from the first end face **E1** (upstream end face) to the second end face **E2** (downstream end face) of the separation membrane complex **10.** The first gas flow path **14** has any appropriate shape in a cross-section in a direction perpendicular to the length direction. An example of the sectional shape of the first gas flow path **14** is a sectional shape similar to that of the cell **191** described above.

As described above, the catalyst **11** is accommodated in the first gas flow path **14.** For convenience, the catalyst **11** is omitted in FIG. **5** and FIG. **6****.**

The housing **12** accommodates the separation membrane complex **10.** More specifically, the housing **12** accommodates the separation membrane complex **10** so that each of the first end face **E1** and the second end face **E2** of the separation membrane complex **10** is exposed.

In one embodiment, the housing **12** includes a side wall **123,** an upstream end wall **121,** and a downstream end wall **122.**

The side wall **123** has any appropriate tubular shape. The shape of the side wall **123** is appropriately modified in accordance with the shape of the porous support **19.** The inner dimension of the side wall **123** is larger than the outer dimension of the porous support **19.**

In one embodiment, the side wall **123** of the housing **12** faces the outer wall **193** of the porous support **19** at an interval. The second flow path **17** described above is formed between the side wall **123** of the housing **12** and the outer wall **193** of the porous support **19.** A gas component (typically water vapor) that has passed through the water vapor separation membranes **18** and the porous support **19** can flow into the second flow path **17.**

In the illustrated example, the side wall **123** has an opening **12a.** The opening **12a** communicates to the second flow path **17.** The opening **12a** allows the gas component (typically water vapor) to be discharged from the second flow path **17.**

The upstream end wall **121** is typically positioned at one end (upstream end) of the housing **12** in an axial direction of the side wall **123.** In one embodiment, the upstream end wall **121** has an upstream port **121a.** The upstream port **121a** exposes the first end face **E1** (upstream end face) of the separation membrane complex **10.** The downstream end portion of the supply line **41** described above is connected to the upstream side wall **121** so as to communicate to the upstream port **121a** (see FIG. **1****).**

The downstream side wall **122** is typically positioned at another end (downstream end) of the housing **12** in the axial direction of the side wall **123.** In one embodiment, the downstream side wall **122** has a downstream port **122a.** The downstream port **122a** exposes the second end face **E2** (downstream end face) of the separation membrane complex **10.** The upstream end portion of the first connection line **51** described above is connected to the downstream side wall **122** so as to communicate to the downstream port **122a** (see FIG. **1****).**

### Industrial Applicability

The condensing device according to the embodiments of the present disclosure is used for condensing various gases. In particular, liquid fuel such as methanol, which is a liquid at room temperature and normal pressure and hence has a low vapor pressure, can be more effectively condensed, and separation from an unreacted gas can be easily performed. Thus, the condensing device may be suitably used for such liquid fuel.

### Reference Signs List

1 reactor
2 gas separator
31 cooling device
32 gas-liquid separator
53 decompression device
100 fuel gas condensing device

## Claims

1. A condensing device, comprising:
a gas separator, to which a mixed gas containing a fuel gas is to be supplied, and which is configured to separate the mixed gas into a first gas and a second gas containing the fuel gas;
a decompression device configured to decompress the second gas; and
a cooling device configured to cool the second gas,
wherein the condensing device is configured so that, through the gas separator, Joule-Thomson coefficient of the second gas becomes larger than Joule-Thomson coefficient of the mixed gas.

2. The condensing device according to claim 1, further comprising at least one reactor arranged on an upstream side of the gas separator in a supply direction of the mixed gas with respect to the gas separator,
wherein a raw material gas containing carbon oxide and hydrogen is to be supplied to the reactor, and
wherein the reactor is configured to discharge the mixed gas containing a fuel gas serving as a reaction product of carbon oxide and hydrogen and the raw material gas that remains unreacted.

3. The condensing device according to claim 2, wherein the gas separator is configured to separate the mixed gas supplied from the reactor into a first gas containing hydrogen as a main component and a second gas containing the fuel gas.

4. The condensing device according to claim 2, further comprising a return line configured to return a gas component of the second gas, which remains in a gas state even after decompression and cooling, to the reactor.

5. The condensing device according to claim 3, further comprising a gas-liquid separator arranged on a downstream side of the gas separator in a discharge direction of the second gas from the gas separator,
wherein the gas-liquid separator is configured to separate liquid fuel condensed from the second gas by decompression and cooling from a gas component of the second gas, which remains in a gas state even after decompression and cooling.

6. The condensing device according to any one of claims 2 to 5, wherein the reactor is a membrane reactor.

7. The condensing device according to any one of claims 1 to 5, wherein the Joule-Thomson coefficient of the second gas is 15.9 K/MPa or less.

8. The condensing device according to any one of claims 1 to 5, wherein the liquid fuel contains alcohols as a main component.
